# EUROPÄISCHE PATENTSCHRIFT

(11) **EP 2 949 437 B1**
(45) Veröffentlichungstag und Bekanntmachung des Hinweises auf die Patenterteilung: **16.01.2019**
(21) Anmeldenummer: 15167433.0
(22) Anmeldetag: 12.05.2015
(51) Int. Cl.: B27D 5/00, B23C 3/12

(54) **ZIEHKLINGENVORRICHTUNG**
SCRAPER BLADE DEVICE
DISPOSITIF DE RACLAGE

(30) Priorität: 30.05.2014 DE 102014107675
(43) Veröffentlichungstag der Anmeldung: 02.12.2015
(73) Patentinhaber: HOLZ-HER GmbH, 72622 Nürtingen (DE)
(72) Erfinder: Rambacher, Markus, 70806 Kornwestheim (DE); Tessier, Georges, 72658 Bempflingen (DE); Lorber, Denis, 72663 Großbettlingen (DE)
(74) Vertreter: Hoeger, Stellrecht & Partner Patentanwälte mbB

(56) Entgegenhaltungen:
- EP-A2- 1 479 495
- EP-A2- 2 394 803
- DE-A1- 3 814 595
- DE-B- 1 300 418
- IT-A1- MI20 110 744
- US-A- 4 507 993

## Beschreibung

Die Erfindung betrifft eine Ziehklingenvorrichtung zur spangebenden Bearbeitung eines auf eine Schmalseite einer Platte aufgebrachten Kantenstreifens, mit mindestens einem Ziehklingenaggregat, das einen Werkzeugträger aufweist, über dessen Umfang verteilt mehrere Ziehklingen lösbar gehalten sind und der mittels eines Drehantriebs um eine Drehachse drehbar ist zum wahlweisen Positionieren von einer der Ziehklingen in einer Schneidposition, in der die gewünschte Ziehklinge mit dem Kantenstreifen in Eingriff steht, wobei die Drehachse quer zum Kantenstreifen ausgerichtet ist.

Eine derartige Ziehklingenvorrichtung kommt zur Bearbeitung eines Kantenstreifens zum Einsatz, der auf eine Schmalseite einer Platte aufgebracht wurde. Der Kantenstreifen wird in einer Kantenanleimmaschine mit der Schmalseite der Platte verleimt, wobei die Platte fortlaufend in einer Transportrichtung bewegt wird. Nach dem Abtrennen der über die in Transportrichtung vordere und hintere Endseite der Platte überstehenden Enden des Kantenstreifens wird der Kantenstreifen üblicherweise mittels eines Fräsaggregates bearbeitet, und anschließend unterliegt der Kantenstreifen einer Bearbeitung durch eine Ziehklingenvorrichtung, mit deren Hilfe dem Kantenstreifen die endgültige Außenkontur verliehen wird und etwaige Fräsmarken entfernt werden.

Aus der DE 90 15 079 U1 ist eine Ziehklingenvorrichtung bekannt, bei der an einem Werkzeugträger eine einzige Ziehklinge gehalten ist mit einer oberen Schneide und einer unteren Schneide, die wahlweise mit dem Kantenstreifen in Eingriff gebracht werden können. Soll die Schneide gewechselt werden, so ist es erforderlich, die Ziehklinge manuell vom Werkzeugträger zu trennen, umzudrehen und anschließend wieder manuell mit dem Werkzeugträger zu verbinden, wobei die Ziehklinge exakt positioniert werden muss. Dies ist mit einem erheblichen Zeitaufwand verbunden.

Aus der DE 201 21 017 U1 ist eine Ziehklingenvorrichtung bekannt, bei der eine Ziehklinge mit mehreren Schneiden zum Einsatz kommt, die unterschiedliche Schneidprofile aufweist. Je nach gewünschtem Schneidprofil kann die Ziehklinge in unterschiedlicher Ausrichtung manuell an einem Werkzeugträger befestigt werden. Aufgrund der Bereitstellung mehrerer Schneidprofile weist die Ziehklinge eine beachtliche Ausdehnung auf und erfordert daher einen nicht unerheblichen Bauraum. Üblicherweise zum Einsatz kommende Tastrollen, mit denen die Position des Kantenstreifens und der Platte während der Bearbeitung des Kantenstreifens abgetastet werden, müssen aufgrund der beachtlichen Ausdehnung der Ziehklinge in einem deutlichen Abstand zu dem jeweils mit dem Kantenstreifen in Eingriff stehenden Schneidprofil angeordnet werden. Und dies wiederum beeinträchtigt die Präzision der Bearbeitung.

Aus der DE 20 2009 006 692 U1 ist eine Ziehklingenvorrichtung bekannt, bei der an den vier Ecken eines plattenförmigen Werkzeugträgers jeweils eine Ziehklinge lösbar gehalten ist. Die Ziehklingen können unterschiedliche Schneidprofile aufweisen und wahlweise durch Drehen des Werkzeugträgers um eine parallel zum Kantenstreifen ausgerichtete Drehachse in eine Schneidposition überführt werden, in der sie mit dem Kantenstreifen in Eingriff stehen. Zum Verdrehen des Werkzeugträgers muss dieser senkrecht zur Drehachse aus einer Arbeitsposition vom Kantenstreifen weg in eine Rückzugsposition verschoben werden, wobei die Verschiebebewegung mit einer Drehbewegung um 90° gekoppelt ist, so dass nach dem Einsatz einer ersten Ziehklinge eine in Uhrzeigerrichtung oder entgegen der Uhrzeigerrichtung um 90° versetzte Ziehklinge in die Schneidposition überführt werden kann. Durch mehrmaliges Hin- und Herbewegen des Werkzeugträgers zwischen der Arbeitsposition und der Rückzugsposition kann der Werkzeugträger um ein ganzzahliges Vielfaches von 90° verdreht werden, um eine der vier Ziehklingen in die Schneidposition zu überführen. Der Wechsel einer Ziehklinge gestaltet sich verhältnismäßig zeitaufwändig und die Ziehklingenvorrichtung erfordert einen nicht unerheblichen Bauraum. Die bekannte Ziehklingenvorrichtung hat darüber hinaus den Nachteil, dass sie eine mechanisch aufwändige Konstruktion aufweist.

Eine Ziehklingenvorrichtung mit den Merkmalen des Oberbegriffes von Patentanspruch 1 ist aus IT MI20 110 744 A1 bekannt.

Aus der DE 38 14 595 A1 ist ein Werkzeugträgerrevolveraufsatz für eine Revolverdrehmaschine bekannt, der einen Trägerkörper für verschiedene Werkzeuge aufweist. Der Trägerkörper ist einer Achse zugeordnet, die in einem Grundkörper drehbar und axial unverschiebbar gehalten ist. Die Achse weist einen ersten Zahnkranz auf und der Grundkörper weist einen zweiten Zahnkranz auf, der den ersten Zahnkranz in Umfangsrichtung umgibt. Ein dritter Zahnkranz ist an einem Kupplungsrad festgelegt und kann in einer Arretierungsstellung des Kupplungsrades gleichzeitig mit dem ersten Zahnkranz und dem zweiten Zahnkranz in Eingriff gelangen und dadurch die Achse blockieren. Durch Verschieben des Kupplungsrades in eine Freigabestellung gibt der dritte Zahnkranz den ersten Zahnkranz und den zweiten Zahnkranz frei, so dass die Achse mittels eines Hydraulikmotors verdreht werden kann.

Aufgabe der vorliegenden Erfindung ist es, eine Ziehklingenvorrichtung der gattungsgemäßen Art derart weiterzubilden, dass sie einen geringeren Bauraum erfordert.

Diese Aufgabe wird durch eine Ziehklingenvorrichtung mit den Merkmalen von Patentanspruch 1 gelöst.

Die erfindungsgemäße Ziehklingenvorrichtung weist mindestens ein Ziehklingenaggregat auf mit einem Werkzeugträger, der mit Hilfe eines Drehantriebs um eine quer zum Kantenstreifen ausgerichtete Drehachse in eine gewünschte Drehstellung verdreht werden kann, in der eine der über den Umfang des Werkzeugträgers verteilt angeordneten Ziehklingen mit dem Kantenstreifen in Eingriff steht. Die Ausrichtung der Drehachse quer zum Kantenstreifen ermöglicht es, einen besonders kleinen Bauraum zu realisieren.

Gemäß der Erfindung ist der Werkzeugträger in einer gewünschten Drehstellung mit einer unverdrehbaren Drehmomentstütze drehfest verbindbar. Während der Bearbeitung des Kantenstreifens über die Ziehklinge auf den Werkzeugträger einwirkende Drehmomente können von der Drehmomentstütze aufgenommen werden, die unverdrehbar gehalten ist.

Die Drehmomentstütze kann beispielsweise starr mit einem Tragteil der Ziehklingenvorrichtung verbunden sein.

Zum Wechsel einer Ziehklinge kann der Werkzeugträger um einen gewünschten Drehwinkel verdreht werden. Hierzu ist die drehfeste Verbindung zwischen der Drehmomentstütze und dem Werkzeugträger durch eine Hubbewegung lösbar. Die Drehmomentstütze und der Werkzeugträger können relativ zueinander linear bewegt werden, um die drehfeste Verbindung zwischen den beiden Bauteilen bei Bedarf zu lösen.

Das mindestens eine Ziehklingenaggregat umfasst einen Hubantrieb, wobei der Werkzeugträger zur Festlegung in einer gewünschten Drehstellung mittels des Hubantriebs mit der Drehmomentstütze drehfest verbindbar und die drehfeste Verbindung zwischen dem Werkzeugträger und der Drehmomentstütze mittels des Hubantriebs lösbar ist. Zur Erzielung einer Drehbewegung und einer Hubbewegung kommen separate Antriebe zum Einsatz. Mittels des Drehantriebs kann der Werkzeugträger in eine gewünschte Drehstellung überführt werden und mittels des Hubantriebs kann die Lage des Werkzeugträgers relativ zur Drehmomentstütze durch eine Hubbewegung geändert und dadurch die drehfeste Verbindung zwischen dem Werkzeugträger und der Drehmomentstütze hergestellt und bei Bedarf gelöst werden.

Durch eine von einem Hubantrieb verursachte Hubbewegung kann eine drehfeste Verbindung zwischen dem Werkzeugträger und einer Drehmomentstütze wahlweise hergestellt und gelöst werden. Hierzu kann vorgesehen sein, dass die Drehmomentstütze an einem Tragteil des Ziehklingenaggregates drehfest und axial unbeweglich gehalten ist und der Werkzeugträger mittels des Hubantriebs relativ zur Drehmomentstütze koaxial zur Drehachse hin und her bewegt werden kann.

Der Werkzeugträger ist über eine Hubstange mit dem Hubantrieb gekoppelt und zwischen einer Arretierungsstellung, in der der Werkzeugträger mit der Drehmomentstütze drehfest verbunden ist, und einer Freigabestellung, in der der Werkzeugträger relativ zur Drehmomentstütze drehbar ist, hin und her verschiebbar.

Gemäß der Erfindung ist der Werkzeugträger über eine hohle, koaxial zur Drehachse ausgerichtete Hubstange mit dem Hubantrieb gekoppelt und der Werkzeugträger ist über eine die Hubstange durchgreifende und relativ zur Hubstange drehbare Antriebswelle mit dem Drehantrieb gekoppelt. Über die Hubstange kann eine Hubbewegung vom Hubantrieb auf den Werkzeugträger übertragen werden und über die Antriebswelle kann eine Drehbewegung vom Drehantrieb auf den Werkzeugträger übertragen werden. Da die Antriebswelle die Hubstange durchgreift, benötigt eine derartige Ausgestaltung einen geringen Bauraum.

Die Antriebswelle ist mit dem Drehantrieb, beispielsweise mit der Motorwelle eines Elektromotors, axial verschiebbar verbunden. Dies gibt die Möglichkeit, die Antriebswelle zusammen mit dem Werkzeugträger unter dem Einfluss des Hubantriebs, beispielsweise eines Kolben-Zylinderaggregats, in axialer Richtung zu verschieben unter Aufrechterhaltung einer drehfesten Verbindung mit dem Drehantrieb.

Von besonderem Vorteil ist es, wenn der Werkzeugträger in seiner Arbeitsposition um die Drehachse drehbar ist. Dies erlaubt einen besonders schnellen Wechsel einer Ziehklinge. Als Arbeitsposition wird hierbei die Lage des Werkzeugträgers verstanden, in der eine der Ziehklingen mit dem Kantenstreifen in Eingriff gebracht werden kann.

Bevorzugt ist der Werkzeugträger mittels des Drehantriebs um die Drehachse kontinuierlich verdrehbar. Dies gibt die Möglichkeit, den Werkzeugträger prinzipiell um einen beliebigen Drehwinkel zu drehen, wobei sich aufeinanderfolgende Drehbewegungen bedarfsweise über unterschiedliche Drehwinkel erstrecken können. Dies hat den Vorteil, dass die Ziehklingen über den Umfang des Werkzeugträgers ungleichmäßig verteilt angeordnet sein können. Selbstverständlich kann auch vorgesehen sein, dass die Ziehklingen über den Umfang gleichmäßig verteilt angeordnet sind.

Günstigerweise sind am Werkzeugträger mehr als zwei Ziehklingen angeordnet, beispielsweise drei, vier, fünf oder sechs Ziehklingen. Mindestens zwei Ziehklingen können identische Schneidprofile aufweisen, so dass beim Verschleiß einer ersten Ziehklinge innerhalb sehr kurzer Zeit ein Wechsel zu einer zweiten Ziehlinge erfolgen kann. Es kann auch vorgesehen sein, dass einige oder alle am Werkzeugträger angeordneten Ziehklingen unterschiedliche Schneidprofile aufweisen, so dass je nach gewünschter Außenkontur des Kantenstreifens die dafür geeignete Ziehklinge innerhalb kurzer Zeit in ihre Schneidposition überführt werden kann, um mit dem Kantenstreifen in Eingriff zu gelangen.

Die Drehbewegung des Werkzeugträgers wird bevorzugt mittels eines steuerbaren Drehantriebs erzielt.

Günstigerweise ist der Drehantrieb als Elektromotor ausgestaltet mit einer Motorwelle, deren Winkelposition und vorzugsweise auch deren Drehrichtung elektrisch steuerbar sind. Von besonderem Vorteil ist der Einsatz eines Servomotors oder Schrittmotors.

Bevorzugt ist die Motorachse des Elektromotors koaxial zur Drehachse des Werkzeugträgers ausgerichtet.

Von Vorteil ist es, wenn der Werkzeugträger mit dem Drehantrieb permanent drehfest gekoppelt ist. Es ist somit nicht erforderlich, den Werkzeugträger in einer gewünschten Drehstellung vom Drehantrieb zu entkoppeln.

Die Hubbewegung dient dazu, die drehfeste Verbindung zwischen dem Werkzeugträger und der Drehmomentstütze wahlweise herzustellen und zu lösen. Der hierzu erforderliche Hub kann weniger als 10 mm, insbesondere weniger als 5 mm betragen.

Bei einer vorteilhaften Ausgestaltung ist ein Hub von etwa 2,5 mm erforderlich, um die drehfeste Verbindung zwischen dem Werkzeugträger und der Drehmomentstütze wahlweise herzustellen und freizugeben.

Der Hubantrieb ist günstigerweise ein manueller, elektrischer, pneumatischer oder hydraulischer Antrieb.

Von besonderem Vorteil ist es, wenn der Hubantrieb ein pneumatisches oder hydraulisches Kolben-Zylinderaggregat umfasst. Mittels des Kolben-Zylinderaggregats kann auf konstruktiv einfache Weise eine Hubbewegung erzielt werden zum wahlweisen Herstellen und Lösen der drehfesten Verbindung zwischen dem Werkzeugträger und der Drehmomentstütze.

Es kann beispielsweise vorgesehen sein, dass die Hubstange in Form einer Kolbenstange ausgebildet ist, über die der Kolben eines Kolben-Zylinderaggregats mit dem Werkzeugträger verbunden ist, wobei die Kolbenstange hohl ausgebildet ist und das Kolben-Zylinderaggregat einschließlich der Kolbenstange von einer Antriebswelle durchgriffen ist, über die der Werkzeugträger mit dem Drehantrieb gekoppelt ist.

Der Drehantrieb kann in Form eines Elektromotors ausgestaltet sein, dessen Motorwelle fluchtend zur Antriebswelle ausgerichtet ist.

Zur drehfesten und axial verschiebbaren Verbindung zwischen der Antriebswelle und dem Drehantrieb kommt günstigerweise eine Klauenkupplung zum Einsatz.

Günstig ist es, wenn der Werkzeugträger über eine Verzahnung drehfest mit der Drehmomentstütze verbindbar ist. Der Werkzeugträger kann hierzu an einer der Drehmomentstütze zugewandten Rückseite mehrere über den Umfang des Werkzeugträgers gleichmäßig verteilt angeordnete Zähne aufweisen, die mit komplementär ausgebildeten Zähnen der Drehmomentstütze zur Erzielung einer drehfesten Verbindung zusammenwirken. Durch eine Relativbewegung zwischen dem Werkzeugträger und der Drehmomentstütze können die Zähne des Werkzeugträgers mit den Zähnen der Drehmomentstütze wahlweise in Eingriff oder außer Eingriff gebracht werden.

Bei einer vorteilhaften Ausführungsform weist das mindestens eine Ziehklingenaggregat eine vertikale Tastrolle auf und der Werkzeugträger taucht beim Wechsel in eine gewünschte Drehstellung in die vertikale Tastrolle ein. Bei einer derartigen Ausgestaltung bildet die vertikale Tastrolle einen Aufnahmeraum aus, in den der Werkzeugträger eintaucht, wenn er um die Drehachse gedreht wird. Beispielsweise kann vorgesehen sein, dass der Werkzeugträger in die vertikale Tastrolle eintaucht, wenn die drehfeste Verbindung zwischen dem Werkzeugträger und der Drehmomentstütze gelöst wird. Dies gibt die Möglichkeit, die vertikale Tastrolle in sehr geringem Abstand zum Werkzeugträger anzuordnen, so dass die Bearbeitung des Kantenstreifens in einem Bereich erfolgen kann, der unmittelbar neben dem Kontaktbereich angeordnet ist, in dem die vertikale Tastrolle die Platte berührt.

Bevorzugt weist mindestens ein Ziehklingenaggregat ein Tastelement auf, beispielsweise eine horizontale Tastrolle oder ein Tastschuh, wobei das Tastelement an der Vorderseite des Kantenstreifens anliegt und die mit dem Kantenstreifen in Eingriff stehende Ziehklinge unmittelbar unterhalb des Kontaktbereichs des Tastelements positionierbar ist.

Günstig ist es, wenn mindestens ein Ziehklingenaggregat eine horizontale und eine vertikale Tastrolle aufweist, die relativ zum Werkzeugträger motorisch verstellbar sind. Durch Verstellen der Tastrollen relativ zum Werkzeugträger kann die mittels der Ziehklinge erzeugbare Außenkontur des Kantenstreifens verändert werden.

Zum motorischen Verstellen der horizontalen Tastrolle kann ein erster Verstellantrieb zum Einsatz kommen und zum motorischen Verstellen der vertikalen Tastrolle kann ein zweiter Verstellantrieb zum Einsatz kommen. Vorzugsweise sind die Verstellantriebe als Elektromotoren ausgestaltet.

Die erfindungsgemäße Ziehklingenvorrichtung weist günstigerweise ein Gestell auf, an dem das mindestens eine Ziehklingenaggregat motorisch verstellbar gehalten ist. Dies gibt die Möglichkeit, das komplette Ziehklingenaggregat zwischen einer Betriebsstellung und einer Außerbetriebsstellung hin und her zu bewegen. In der Betriebsstellung nimmt das Ziehklingenaggregat einen geringeren Abstand zum Kantenstreifen ein als in der Außerbetriebsstellung. In der Betriebsstellung kann der Kantenstreifen bearbeitet werden, wohingegen in der Außerbetriebsstellung keine Bearbeitung erfolgt.

Bei einer besonders bevorzugten Ausgestaltung weist die erfindungsgemäße Ziehklingenvorrichtung zwei Ziehklingenaggregate auf zum gleichzeitigen Bearbeiten einer oberen und einer unteren Kante des Kantenstreifens. Die beiden Ziehklingenaggregate ermöglichen es, die Platte mit vertikal ausgerichteten Bearbeitungskräften zu beaufschlagen, die einander entgegengerichtet sind. Bei der Bearbeitung der oberen Kante des Kantenstreifens mit Hilfe eines ersten Ziehklingenaggregats kann die Platte mit einer vertikal nach unten gerichteten Bearbeitungskraft beaufschlagt werden und bei der Bearbeitung der unteren Kante des Kantenstreifens mit Hilfe eines zweiten Ziehklingenaggregates kann die Platte mit einer vertikal nach oben gerichteten Bearbeitungskraft beaufschlagt werden. Die einander entgegengerichteten Bearbeitungskräfte reduzieren etwaige Schwingungen der Platte und erlauben daher eine besonders präzise Bearbeitung.

Die nachfolgende Beschreibung einer vorteilhaften Ausführungsform der Erfindung dient im Zusammenhang mit der Zeichnung der näheren Erläuterung. Es zeigen:
- Figur 1:: eine perspektivische, teilweise aufgeschnittene Darstellung einer Ziehklingenvorrichtung mit zwei Ziehklingenaggregaten;
- Figur 2:: eine vergrößerte perspektivische Teildarstellung eines Ziehklingenaggregates der Ziehklingenvorrichtung aus Figur 1;

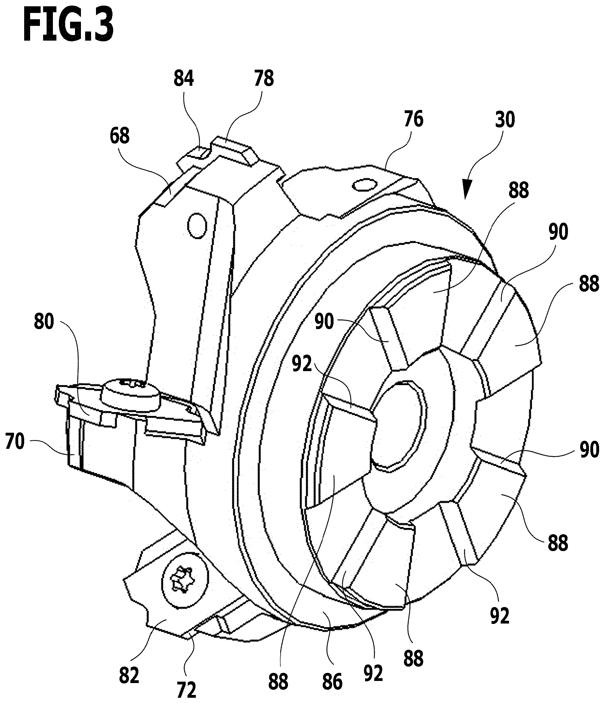

- Figur 3:: eine vergrößerte perspektivische Darstellung eines Werkzeugträgers des Ziehklingenaggregates aus Figur 2;

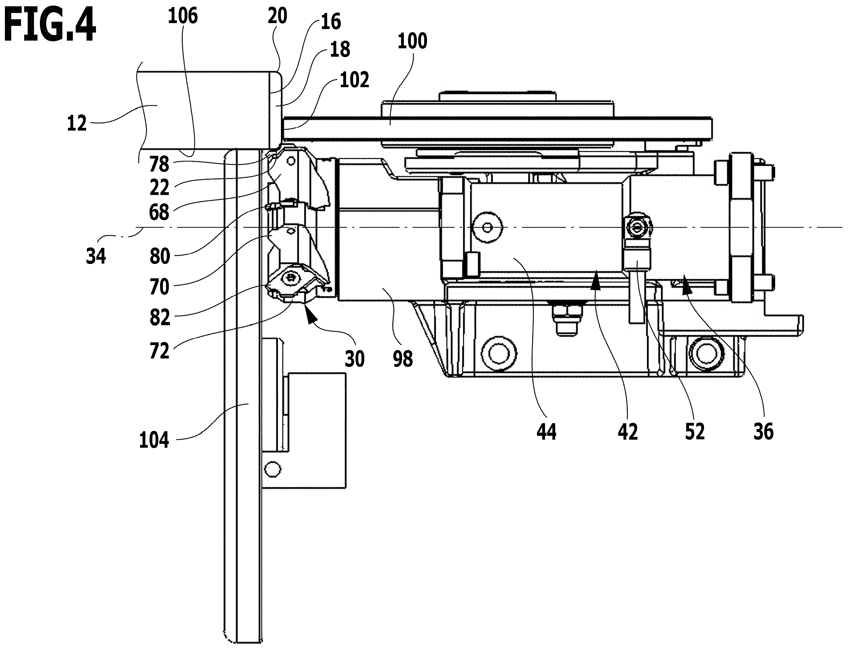

- Figur 4:: eine Seitenansicht des Ziehklingenaggregates aus Figur 2;
- Figur 5:: eine teilweise aufgetrennte Seitenansicht des Ziehklingenaggregats aus Figur 2, wobei eine vertikale Tastrolle entfernt wurde und der Werkzeugträger eine Arretierungsstellung einnimmt, und
- Figur 6:: eine teilweise aufgetrennte Seitenansicht entsprechend Figur 5, wobei der Werkzeugträger eine Freigabestellung einnimmt.

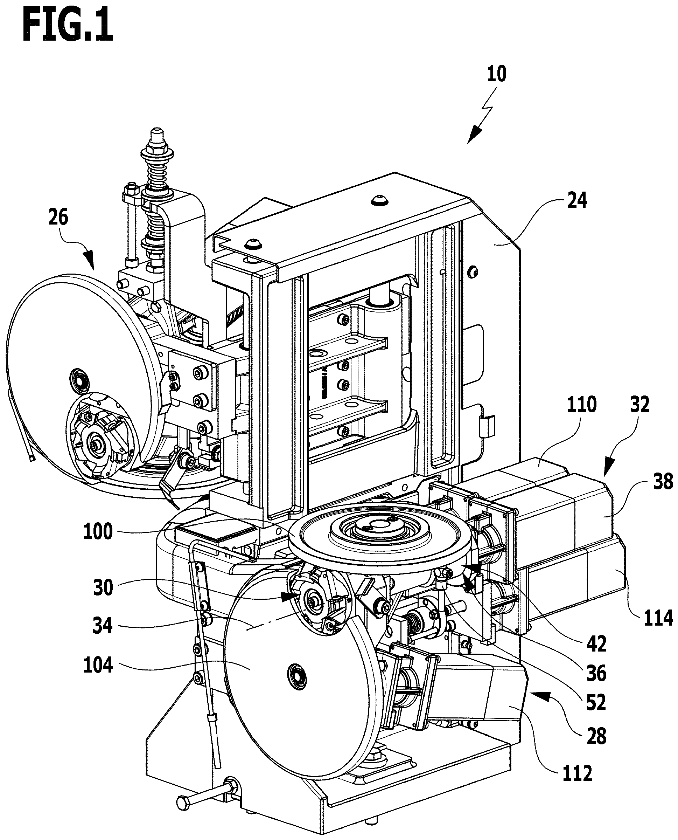

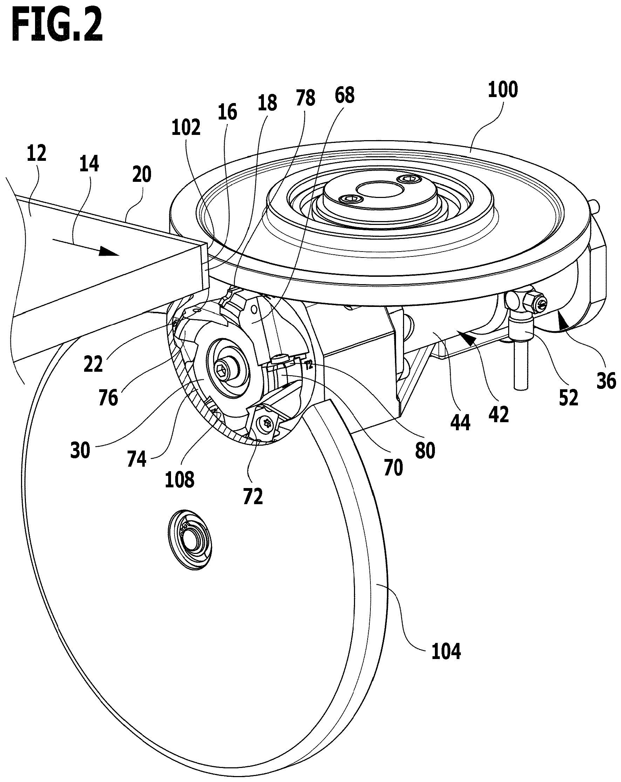

In Figur 1 ist schematisch eine vorteilhafte Ausführungsform einer erfindungsgemäßen Ziehklingenvorrichtung dargestellt, die insgesamt mit dem Bezugszeichen 10 belegt ist. Die Ziehklingenvorrichtung 10 kommt bei einer Kantenanleimmaschine zum Einsatz. Die Kantenanleimmaschine weist in bekannter Weise eine Transportvorrichtung auf, mit deren Hilfe eine üblicherweise aus Holz oder einem Holzersatzstoff bestehende Platte in einer Transportrichtung bewegt werden kann. In Figur 2 ist eine derartige Platte 12 ausschnittsweise dargestellt und eine Transportrichtung wird durch den Pfeil 14 veranschaulicht. Mittels der Kantenanleimmaschine kann an eine Schmalseite 16 der Platte 12 ein Kantenstreifen 18 angeleimt werden und mittels der Ziehklingenvorrichtung 10 können eine obere Kante 20 und eine untere Kante 22 bearbeitet werden, um dem Kantenstreifen 18 eine endgültige Außenkontur zu verleihen und etwaige Fräsmarken, die bei einer zuvor erfolgten Bearbeitung des Kantenstreifens 18 mittels eines Fräsaggregates der Kantenanleimmaschine erzeugt wurden, zu entfernen.

Die Ziehklingenvorrichtung 10 weist ein Tragteil in Form eines Gestells 24 auf, an dem ein erstes Ziehklingenaggregat 26 zur Bearbeitung der oberen Kante 20 des Kantenstreifens 18 und ein zweites Ziehklingenaggregat 28 zur Bearbeitung der unteren Kante 22 des Kantenstreifens 18 gelagert sind. Die beiden Ziehklingenaggregate 26 und 28 sind im Wesentlichen spiegelsymmetrisch zueinander ausgebildet. Zur Vermeidung von Wiederholungen wird deshalb nachfolgend lediglich das zweite Ziehklingenaggregat 28 im Detail erläutert. Die Erläuterungen zum zweiten Ziehklingenaggregat 28 gelten jedoch unter Beachtung der Spiegelsymmetrie in gleicher Weise auch für das erste Ziehklingenaggregat 26.

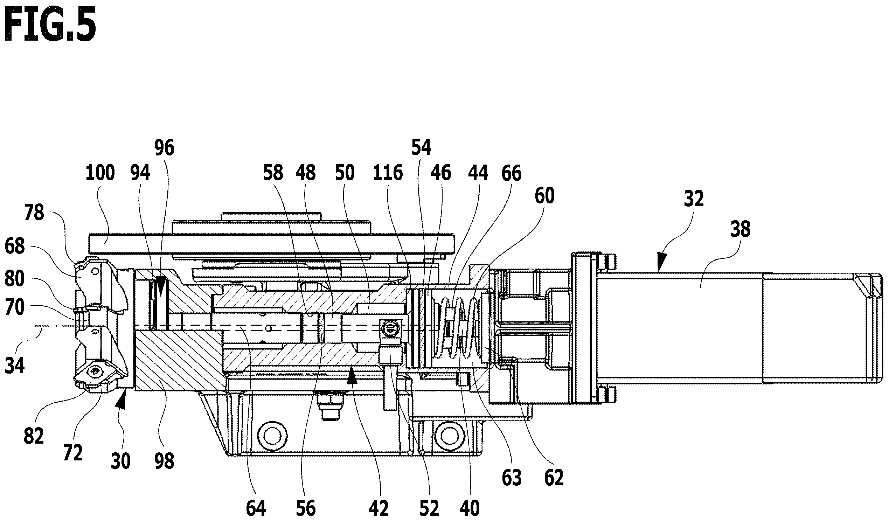

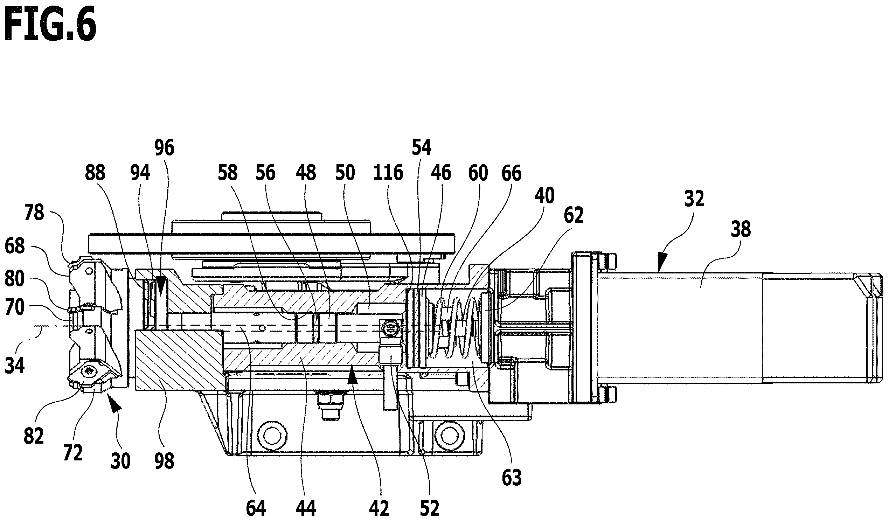

Das Ziehklingenaggregat 28 weist einen Werkzeugträger 30 auf, der mittels eines Drehantriebs 32 um eine quer zur Längserstreckung des Kantenstreifens 18 und damit quer zur Transportrichtung 14 ausgerichtete Drehachse 34 verdreht werden kann und der mittels eines Hubantriebs 36 in Richtung der Drehachse 34 zwischen einer in Figur 5 dargestellten Arretierungsstellung und einer in Figur 6 dargestellten Freigabestellung hin und her bewegt werden kann.

Im dargestellten Ausführungsbeispiel ist der Drehantrieb 32 in Form eines Elektromotors 38 ausgestaltet mit einer Motorwelle 40, deren Winkelposition und Drehrichtung mit Hilfe einer an sich bekannten und deshalb in der Zeichnung zur Erzielung einer besseren Übersicht nicht dargestellten elektrischen Steuereinheit steuerbar ist. Mittels des Elektromotors 38 kann der Werkzeugträger 30 um einen beliebigen Drehwinkel um die Drehachse 34 verdreht werden.

Der Hubantrieb 36 ist im dargestellten Ausführungsbeispiel als pneumatisches Kolben-Zylinderaggregat 42 ausgestaltet mit einem Zylinder 44, in dem ein Kolben 46 koaxial zur Drehachse 34 hin und her bewegt werden kann. Der Kolben 46 ist über eine hohl ausgestaltete Kolbenstange 48 mit dem Werkzeugträger 30 verbunden, so dass eine Hubbewegung des Kolbens 46 über die Kolbenstange 48 auf den Werkzeugträger 30 übertragen werden kann. Die Kolbenstange 48 ist innerhalb des Zylinders 44 in einem unmittelbar an den Kolben 46 angrenzenden Bereich von einem Ringraum 50 umgeben, der über einen Druckluftanschluss 52 von einer in der Zeichnung nicht dargestellten, an sich bekannten Druckluftquelle mit Druckluft beaufschlagt werden kann. Zur Abdichtung des Ringraums 50 ist der Kolben 46 in Umfangsrichtung von einem ersten Dichtring 54 umgeben, über den der Kolben 46 dicht an der Innenseite des Zylinders 44 anliegt, und die Kolbenstange 48 ist im Abstand zum Kolben 46 von einem zweiten Dichtring 56 umgeben, über den die Kolbenstange 48 dicht an einer Querschnittsverengung 58 des Zylinders 44 anliegt.

Auf seiner dem Ringraum 50 abgewandten Seite wird der Kolben 46 von der Kraft einer Rückstellfeder 60 beaufschlagt, die sich einerseits am Kolben 46 und andererseits an einem Deckel 62 des Zylinders 44 abstützt. Die Rückstellfeder ist in einem Kolbenraum 63 des Zylinders 44 angeordnet, der sich zwischen dem Kolben 46 und dem Deckel 62 erstreckt.

Die Kolbenstange 48 wird ebenso wie der Kolben 46 von einer Antriebswelle 64 durchgriffen, über die die Motorwelle 40 drehfest mit dem Werkzeugträger 30 gekoppelt ist. Zu diesem Zweck ist die Antriebswelle 64 mit dem Werkzeugträger 30 verschraubt und über eine Klauenkupplung 66 drehfest aber in Richtung der Drehachse 34 verschiebbar mit der Motorwelle 40 verbunden. Die Klauenkupplung 66 ist im Kolbenraum 63 angeordnet und von der Rückstellfeder 60 umgeben, die als Schraubenfeder ausgestaltet ist.

Der Werkzeugträger 30 weist im dargestellten Ausführungsbeispiel fünf schräg nach außen weisende Stützarme 68, 70, 72, 74, 76 auf, an denen jeweils eine Ziehklinge lösbar gehalten ist, wobei in der Zeichnung nur die an den Stützarmen 68, 70 und 72 gehaltenen Ziehklingen 78, 80 und 82 erkennbar sind. In der dargestellten Drehstellung des Werkzeugträgers 30 befindet sich die Ziehklinge 78 in einer Schneidposition, in der sie mit der unteren Kante 22 des Kantenstreifens 18 in Eingriff gebracht werden kann. Statt der Ziehklinge 78 kann auch jede weitere Ziehklinge in die Schneidposition überführt werden. Hierzu ist es lediglich erforderlich, den Werkzeugträger 30 um die Drehachse 34 zu verdrehen. Dies wird nachfolgend noch näher erläutert.

Die an den Stützarmen 68 bis 76 angeordneten Ziehklingen unterscheiden sich im dargestellten Ausführungsbeispiel durch ihr Schneidprofil 84, so dass der unteren Kante 22 des Kantenstreifens 18 durch Wahl der gewünschten Ziehklinge eine bestimmte Außenkontur verliehen werden kann. In entsprechender Weise kann durch Wahl der am Werkzeugträger des ersten Ziehklingenaggregats 26 angeordneten Ziehklingen der oberen Kante 20 des Kantenstreifens 18 eine gewünschte Außenkontur verliehen werden.

Auf seiner dem Kolben-Zylinderaggregat 42 zugewandten Rückseite 86 weist der Werkzeugträger 30 mehrere in Umfangsrichtung gleichmäßig verteilt angeordnete Zähne 88 auf, die jeweils schräg ausgerichtete Zahnflanken 90, 92 aufweisen. Die Zähne 88 können mit komplementär ausgebildeten Zähnen 94 einer im Wesentlichen zylindrischen Drehmomentstütze 96 in Eingriff gebracht werden, indem der Ringraum 50 des Kolben-Zylinderaggregats 42 mit Druckluft beaufschlagt wird. Die Drehmomentstütze 96 ist drehfest und axial unverschieblich an einem Tragteil 98 des Ziehklingenaggregats 28 festgelegt, das starr mit dem Zylinder 44 verbunden ist. Die Drehmomentstütze 96 wird sowohl von der Kolbenstange 48 als auch von der Antriebswelle 64 durchgriffen. Die während einer Bearbeitung des Kantenstreifens 18 über die jeweils zum Einsatz kommende Ziehklinge auf den Werkzeugträger 30 einwirkenden Drehmomente werden von der Drehmomentstütze 96 auf das Tragteil 98 übertragen.

Das Ziehklingenaggregat 28 ist in vertikaler Richtung und parallel zur Drehachse 34 in horizontaler Richtung verschiebbar am Gestell 24 der Ziehklingenvorrichtung 10 gehalten. Mittels einer horizontalen Tastrolle 100 kann die Stirnseite 102 des Kantenstreifens 18 abgetastet werden, und mittels einer vertikalen Tastrolle 104 kann die Unterseite 106 der Platte 12 abgetastet werden. Statt der horizontalen Tastrolle 100 könnte auch ein Tastschuh zum Einsatz kommen, der an der Stirnseite 102 des Kantenstreifens 18 entlanggleitet.

Wie insbesondere aus Figur 2 deutlich wird, ist die vertikale Tastrolle 104 hohl ausgebildet, indem sie auf ihrer dem Werkzeugträger 30 zugewandten Seite eine Vertiefung 108 ausbildet, in die der Werkzeugträger 30 mit seinem der vertikalen Tastrolle 104 zugewandten vorderen Bereich eintauchen kann.

Die horizontale Tastrolle 100 kann mittels eines ersten Verstellantriebs 110 verstellt werden und die vertikale Tastrolle 104 kann mittels eines zweiten Verstellantriebs verstellt werden. Die Verstellantriebe 110, 112 sind im dargestellten Ausführungsbeispiel als Elektromotoren ausgestaltet. Durch Verstellen der Tastrollen 100, 104 kann die Position der mit dem Kantenstreifen 18 in Eingriff stehenden Ziehklinge relativ zum Kantenstreifen verändert werden, so dass unterschiedliche Konturausprägungen, beispielsweise unterschiedliche Fasen erzeugt werden können.

Das gesamte Ziehklingenaggregat 28 kann mittels eines dritten Verstellantriebs 114 um eine parallel zur Drehachse 34 ausgerichtete Achse zwischen einer Betriebsstellung und einer Außerbetriebsstellung hin und her bewegt werden. In der Betriebsstellung kann eine gewünschte Ziehklinge mit dem Kantenstreifen 18 in Eingriff gebracht werden, und in der Außerbetriebsstellung nehmen sämtliche Ziehklingen einen Abstand zum Kantenstreifen 18 ein.

Während der Bearbeitung des Kantenstreifens 18 mittels des Ziehklingenaggregats 28 wird der Ringraum 50 des Kolben-Zylinderaggregats 42 mit Druckluft beaufschlagt, so dass der Kolben 46 entgegen der Kraft der Rückstellfeder 60 in Richtung auf den Deckel 62 verschoben wird. Diese Hubbewegung wird über die Kolbenstange 48 auf den Werkzeugträger 30 übertragen, so dass dieser gegen die Drehmomentstütze 96 gedrückt wird und die Zähne 88 des Werkzeugträgers 30 mit den Zähnen 94 der Drehmomentstütze 96 in Eingriff stehen. Der Werkzeugträger 30 nimmt somit durch Druckbeaufschlagung des Ringraums 50 seine in Figur 5 dargestellte Arretierungsstellung ein, in der er mit der Drehmomentstütze 96 drehfest verbunden ist.

Soll der Werkzeugträger 30 zum Wechsel einer Ziehklinge um die Drehachse 34 verdreht werden, so wird die Beaufschlagung des Ringraums 50 mit Druckluft beendet und unter der Wirkung der Rückstellfeder 60 wird der Kolben 46 in die dem Deckel 62 abgewandte Richtung verschoben, bis er an einer Stufe 116 des Zylinders 44 anliegt. Die Hubbewegung des Kolbens 46 wird erneut über die Kolbenstange 48 auf den Werkzeugträger 30 übertragen, der hierbei von der Drehmomentstütze 96 wegbewegt wird, so dass die Zähne 88 des Werkzeugträgers 30 die Zähne 94 der Drehmomentstütze 96 freigeben und der Werkzeugträger 30 von der Drehmomentstütze 96 ungehindert um die Drehachse 34 verdreht werden kann. Der Werkzeugträger 30 nimmt hierbei seine in Figur 6 dargestellte Freigabestellung ein. Zum Verdrehen des Werkzeugträgers 30 wird der Elektromotor 38 aktiviert, wobei die Drehbewegung der Motorwelle 40 über die Klauenkupplung 66 auf die Antriebswelle 64 und von dieser auf den Werkzeugträger 30 übertragen wird. Hat der Werkzeugträger 30 seine gewünschte Drehstellung eingenommen, in der nunmehr eine andere Ziehklinge mit dem Kantenstreifen 18 in Eingriff steht, so wird der Ringraum 50 erneut mit Druckluft beaufschlagt, so dass der Werkzeugträger 30 wieder in seine Arretierungsstellung übergeht, in der er mit der Drehmomentstütze 96 drehfest verbunden ist.

Im dargestellten Ausführungsbeispiel kommt als Hubantrieb 36 ein einseitig wirkendes Kolben-Zylinderaggregat zum Einsatz. Die Erfindung ist nicht auf eine derartige Ausgestaltung des Hubantriebs beschränkt. Beispielsweise könnte auch vorgesehen sein, ein doppelt wirkendes Kolben-Zylinderaggregat einzusetzen, bei dem wahlweise der Ringraum 50 mit Druckluft beaufschlagt wird oder der Kolbenraum 63.

Im dargestellten Ausführungsbeispiel sind am Werkzeugträger 30 über dessen Umfang verteilt insgesamt fünf Ziehklingen angeordnet. Alternativ könnten auch Werkzeugträger zum Einsatz kommen, an denen eine andere Anzahl von Ziehklingen angeordnet sind. Hierbei ist es nicht zwingend erforderlich, dass die Ziehklingen über den Umfang des Werkzeugträgers gleichmäßig verteilt angeordnet sind, es kann vielmehr auch eine ungleichmäßige Verteilung zum Einsatz kommen, so dass bei einem Wechsel einer Ziehklinge der Werkzeugträger gegebenenfalls um unterschiedliche Drehwinkel verdreht wird.

Das Ziehklingenaggregat 28 ist spiegelsymmetrisch zum Ziehklingenaggregat 28 ausgestaltet. Darauf wurde bereits hingewiesen. Mittels der beiden Ziehklingenaggregate 26 und 28 können die obere Kante 20 und die untere Kante 22 des Kantenstreifens 18 gleichzeitig bearbeitet werden. Im dargestellten Ausführungsbeispiel sind die beiden Ziehklingenaggregate 26, 28 bezogen auf die Transportrichtung 14 der Platte 12 versetzt zueinander angeordnet. Die Erfindung ist auf eine derartige Anordnung nicht begrenzt. Vielmehr kann vorgesehen sein, dass die beiden Ziehklingenaggregate 26, 28 bezogen auf die Transportrichtung 14 auf gleicher Höhe angeordnet sind, wobei bei einer derartigen Ausgestaltung die Führung der beiden Ziehklingenaggregate 26, 28 entlang der Stirnseite 102 des Kantenstreifens 18 mit Hilfe einer einzigen horizontalen Tastrolle oder eines Tastschuhs erfolgen kann. Die Anordnung der beiden Ziehklingenaggregate 26, 28 unmittelbar übereinander auf gleicher Höhe bezogen auf die Transportrichtung 14 hat den Vorteil, dass der Bauraum der Ziehklingenvorrichtung 10 besonders klein gehalten werden kann und Schwingungen der Platte 12 während der Bearbeitung des Kantenstreifens 18 besonders gering gehalten werden können.

## Patentansprüche

1. Ziehklingenvorrichtung zur spangebenden Bearbeitung eines auf eine Schmalseite (16) einer Platte (12) aufgebrachten Kantenstreifens (18), mit mindestens einem Ziehklingenaggregat (26, 28), das einen Werkzeugträger (30) aufweist, über dessen Umfang verteilt mehrere Ziehklingen (78, 80, 82) lösbar gehalten sind und der mittels eines Drehantriebs (32) um eine Drehachse (34) drehbar ist zum wahlweisen Positionieren von einer der Ziehklingen (78, 80, 82) in einer Schneidposition, in der die gewünschte Ziehklinge (78, 80, 82) mit dem Kantenstreifen (18) in Eingriff steht, wobei die Drehachse (34) quer zum Kantenstreifen (18) ausgerichtet ist, **dadurch gekennzeichnet, dass** der Werkzeugträger (30) in einer gewünschten Drehstellung mit einer unverdrehbaren Drehmomentstütze (96) drehfest verbindbar ist und die drehfeste Verbindung zwischen dem Werkzeugträger (30) und der Drehmomentstütze (96) durch eine Hubbewegung lösbar ist, wobei die Drehmomentstütze (96) und der Werkzeugträger (30) relativ zueinander linear bewegbar sind, wobei das mindestens eine Ziehklingenaggregat (26, 28) einen Hubantrieb (36) umfasst, wobei der Werkzeugträger (30) zur Festlegung in einer gewünschten Drehstellung mittels des Hubantriebs (36) drehfest mit der Drehmomentstütze (96) verbindbar und die drehfeste Verbindung zwischen dem Werkzeugträger (30) und der Drehmomentstütze (96) mittels des Hubantriebs (36) lösbar ist, wobei der Werkzeugträger (30) über eine hohle, koaxial zur Drehachse (34) ausgerichtete Hubstange (48) mit dem Hubantrieb (36) gekoppelt und zwischen einer Arretierungsstellung, in der der Werkzeugträger (30) mit der Drehmomentstütze (96) drehfest verbunden ist, und einer Freigabestellung, in der der Werkzeugträger (30) relativ zur Drehmomentstütze (96) verdrehbar ist, hin und her verschiebbar ist, und wobei der Werkzeugträger (30) über eine die Hubstange (48) durchgreifende und relativ zur Hubstange (48) drehbare Antriebswelle (64) mit dem Drehantrieb (32) gekoppelt ist, wobei die Antriebswelle (64) mit dem Drehantrieb (32) axial verschiebbar verbunden ist.

2. Ziehklingenvorrichtung nach Anspruch 1, **dadurch gekennzeichnet, dass** der Drehantrieb (32) als Elektromotor (38) ausgestaltet ist mit einer Motorwelle (40), deren Winkelposition und vorzugsweise auch deren Drehrichtung elektrisch steuerbar sind.

3. Ziehklingenvorrichtung nach Anspruch 1 oder 2, **dadurch gekennzeichnet, dass** der Werkzeugträger (30) mit dem Drehantrieb (32) permanent drehfest gekoppelt ist.

4. Ziehklingenvorrichtung nach einem der voranstehenden Ansprüche, **dadurch gekennzeichnet, dass** der Hubantrieb (36) ein manueller, elektrischer, pneumatischer oder hydraulischer Antrieb ist.

5. Ziehklingenvorrichtung nach einem der voranstehenden Ansprüche, **dadurch gekennzeichnet, dass** der Hubantrieb (36) ein pneumatisches oder hydraulisches Kolben-Zylinderaggregat (42) umfasst.

6. Ziehklingenvorrichtung nach einem der voranstehenden Ansprüche, **dadurch gekennzeichnet, dass** der Werkzeugträger (30) über eine Verzahnung (88, 94) drehfest mit der Drehmomentstütze (96) verbindbar ist.

7. Ziehklingenvorrichtung nach einem der voranstehenden Ansprüche, **dadurch gekennzeichnet, dass** das mindestens eine Ziehklingenaggregat (26, 28) eine vertikale Tastrolle (104) aufweist, in die der Werkzeugträger (30) beim Wechsel in eine gewünschte Drehstellung eintaucht.

8. Ziehklingenvorrichtung nach einem der voranstehenden Ansprüche, **dadurch gekennzeichnet, dass** mindestens ein Ziehklingenaggregat (26, 28) ein Tastelement (100) aufweist, das während der Bearbeitung des Kantenstreifens (18) an dessen Vorderseite anliegt, wobei die mit dem Kantenstreifen (18) in Eingriff stehende Ziehklinge unmittelbar unterhalb des Kontaktbereichs des Tastelements (100) positionierbar ist.

9. Ziehklingenvorrichtung nach einem der voranstehenden Ansprüche, **dadurch gekennzeichnet, dass** mindestens ein Ziehklingenaggregat (26, 28) eine horizontale Tastrolle (100) und eine vertikale Tastrolle (104) aufweist, die relativ zum Werkzeugträger (30) motorisch verstellbar sind.

10. Ziehklingenvorrichtung nach einem der voranstehenden Ansprüche, **dadurch gekennzeichnet, dass** das mindestens eine Ziehklingenaggregat (26, 28) motorisch verstellbar an einem Gestell (24) gehalten ist.

11. Ziehklingenvorrichtung nach einem der voranstehenden Ansprüche, **dadurch gekennzeichnet, dass** die Ziehklingenvorrichtung (10) zwei Ziehklingenaggregate (26, 28) aufweist zum gleichzeitigen Verarbeiten einer oberen Kante (20) und einer unteren Kante (22) des Kantenstreifens (18).

## Claims

1. Scraper apparatus for machining an edge strip (18) applied to a narrow side (16) of a panel (12), with at least one scraper assembly (26, 28) which comprises a tool holder (30), distributed about the circumference of which multiple scrapers (78, 80, 82) are releasably held, and which is rotatable about a rotational axis (34) by means of a rotary drive (32) for selectively positioning one of the scrapers (78, 80, 82) in a cutting position in which the desired scraper (78, 80, 82) is in engagement with the edge strip (18), wherein the rotational axis (34) is aligned transverse to the edge strip (18), **characterized in that** the tool holder (30) is connectible to a non-rotatable torque support (96) in a desired rotational position and the non-rotatable connection between the tool holder (30) and the torque support (96) is releasable by a stroke movement, wherein the torque support (96) and the tool holder (30) are linearly moveable relative to each other, wherein the at least one scraper assembly (26, 28) comprises a stroke drive (36), wherein the tool holder (30) is non-rotatably connectible to the torque support (96) by means of a stroke drive (36) for fixing in a desired rotational position and the non-rotatable connection between the tool holder (30) and the torque support (96) is releasable by means of the stroke drive (36), wherein the tool holder (30) is coupled to the stroke drive (36) by way of a hollow stroke rod (48) aligned coaxial to the rotational axis (34) and is displaceable back and forth between a locking position, in which the tool holder (30) is non-rotatably connected to the torque support (96), and a release position in which the tool holder (30) is rotatable relative to the torque support (96), and wherein the tool holder (30) is coupled to the rotary drive (32) by way of a drive shaft (64) which passes through the stroke rod (48) and is rotatable relative to the stroke rod (48), wherein the drive shaft (64) is axially displaceably connected to the rotary drive (32).

2. Scraper apparatus in accordance with Claim 1, **characterized in that** the rotary drive (32) is configured as an electric motor (38) with a motor shaft (40), the angular position and preferably also the rotational direction of which are electrically controllable.

3. Scraper apparatus in accordance with Claim 1 or 2, **characterized in that** the tool holder (30) is permanently non-rotatably coupled to the rotary drive (32).

4. Scraper apparatus in accordance with any one of the preceding Claims, **characterized in that** the stroke drive (36) is a manual, electric, pneumatic, or hydraulic drive.

5. Scraper apparatus in accordance with any one of the preceding Claims, **characterized in that** the stroke drive (36) comprises a pneumatic or hydraulic piston-cylinder assembly (42).

6. Scraper apparatus in accordance with any one of the preceding Claims, **characterized in that** the tool holder (30) is non-rotatably connectible to the torque support (96) by way of a toothing (88, 94).

7. Scraper apparatus in accordance with any one of the preceding Claims, **characterized in that** the at least one scraper assembly (26, 28) comprises a vertical sensing roller (104) into which the tool holder (30) dips when switching into a desired rotational position.

8. Scraper apparatus in accordance with any one of the preceding Claims, **characterized in that** at least one scraper assembly (26, 28) comprises a sensing element (100) which abuts against the front side of the edge strip (18) during the machining thereof, wherein the scraper in engagement with the edge strip (18) is positionable immediately beneath the contact region of the sensing element (100).

9. Scraper apparatus in accordance with any one of the preceding Claims, **characterized in that** the at least one scraper assembly (26, 28) comprises a horizontal sensing roller (100) and a vertical sensing roller (104) which are adjustable relative to the tool holder (30) in a motorized manner.

10. Scraper apparatus in accordance with any one of the preceding Claims, **characterized in that** the at least one scraper assembly (26, 28) is held on the frame (24) so as to be adjustable in a motorized manner.

11. Scraper apparatus in accordance with any one of the preceding Claims, **characterized in that** the scraper apparatus (10) comprises two scraper assemblies (26, 28) for simultaneously processing an upper edge (20) and a lower edge (22) of the edge strip (18).

## Revendications

1. Dispositif à racloirs pour l'usinage par enlèvement de copeaux d'une bande de chant (18) appliquée sur un petit côté (16) d'un panneau (12), comprenant au moins un ensemble de racloirs (26, 28), qui présente un porte-outil (30) à la périphérie duquel sont répartis plusieurs racloirs (78, 80, 82) retenus de manière détachable et qui peut tourner autour d'un axe de rotation (34) au moyen d'un entraînement rotatif (32) pour le positionnement sélectif d'un des racloirs (78, 80, 82) dans une position de coupe, dans laquelle le racloir (78, 80, 82) souhaité est en contact avec la bande de chant (18), dans lequel l'axe de rotation (34) est orienté transversalement à la bande de chant (18), **caractérisé en ce que** le porte-outil (30), dans une position rotative souhaitée, peut être relié de manière solidaire en rotation à un support de couple (96) non rotatif et la liaison solidaire en rotation entre le porte-outil (30) et le support de couple (96) peut être libérée par un mouvement de levage, dans lequel le support de couple (96) et le porte-outil (30) peuvent être déplacés linéairement l'un par rapport à l'autre, dans lequel le au moins un ensemble de racloirs (26, 28) comporte un entraînement de levage (36), dans lequel le porte-outil (30) peut être relié de manière solidaire en rotation au support de couple (96) au moyen de l'entraînement de levage (36) aux fins d'immobilisation dans une position rotative souhaitée et la liaison solidaire en rotation entre le porte-outil (30) et le support de couple (96) peut être libérée au moyen de l'entraînement de levage (36), dans lequel le porte-outil (30) est accouplé à l'entraînement de levage (36) par l'intermédiaire d'une tige de levage (48) creuse orientée de manière coaxiale à l'axe de rotation (34) et peut coulisser en va-et-vient entre une position de blocage, dans laquelle le porte-outil (30) est relié de manière solidaire en rotation au support de couple (96), et une position de libération, dans laquelle le porte-outil (30) peut être amené en rotation par rapport au support de couple (96), et dans lequel le porte-outil (30) est accouplé à l'entraînement rotatif (32) par l'intermédiaire d'un arbre d'entraînement (64) traversant la tige de levage (48) et pouvant être amenée en rotation par rapport à la tige de levage (48), dans lequel l'arbre d'entraînement (64) est relié à l'entraînement rotatif (32) de manière à pouvoir coulisser axialement.

2. Dispositif à racloirs selon la revendication 1, **caractérisé en ce que** l'entraînement rotatif (32) est réalisé sous la forme d'un moteur électrique (38) pourvu d'un arbre de moteur (40) dont la position angulaire et de préférence également le sens de rotation peuvent être commandés électriquement.

3. Dispositif à racloirs selon la revendication 1 ou 2, **caractérisé en ce que** le porte-outil (30) est accouplé en permanence à l'entraînement rotatif (32) de manière solidaire en rotation.

4. Dispositif à racloirs selon l'une quelconque des revendications précédentes, **caractérisé en ce que** l'entraînement de levage (36) est un entraînement manuel, électrique, pneumatique ou hydraulique.

5. Dispositif à racloirs selon l'une quelconque des revendications précédentes, **caractérisé en ce que** l'entraînement de levage (36) comporte un ensemble piston-cylindre (42) pneumatique ou hydraulique.

6. Dispositif à racloirs selon l'une quelconque des revendications précédentes, **caractérisé en ce que** le porte-outil (30) peut être relié au support de couple (96) de manière solidaire en rotation par l'intermédiaire d'une denture (88, 94).

7. Dispositif à racloirs selon l'une quelconque des revendications précédentes, **caractérisé en ce que** le au moins un ensemble de racloirs (26, 28) présente un galet palpeur vertical (104) dans lequel le porte-outil (30) s'enfonce lors du passage dans une position rotative souhaitée.

8. Dispositif à racloirs selon l'une quelconque des revendications précédentes, **caractérisé en ce qu'**au moins un ensemble de racloirs (26, 28) présente un élément palpeur (100), qui, pendant l'usinage de la bande de chant (18), s'applique contre la face avant de celle-ci, dans lequel le racloir en prise avec la bande de chant (18) peut être positionné directement au-dessous de la zone de contact de l'élément palpeur (100) .

9. Dispositif à racloirs selon l'une quelconque des revendications précédentes, **caractérisé en ce qu'**au moins un ensemble de racloirs (26, 28) présente un galet palpeur horizontal (100) et un galet palpeur vertical (104), qui peuvent être déplacés de façon motorisée par rapport au porte-outil (30).

10. Dispositif à racloirs selon l'une quelconque des revendications précédentes, **caractérisé en ce que** le au moins un ensemble de racloirs (26, 28) est retenu sur un bâti (24) de manière à pouvoir se déplacer de façon motorisée.

11. Dispositif à racloirs selon l'une quelconque des revendications précédentes, **caractérisé en ce que** le dispositif à racloirs (10) comprend deux ensembles de racloirs (26, 28) pour l'usinage simultané d'un chant supérieur (20) et d'un chant inférieur (22) de la bande de chant (18).
